Europäisches Patentamt

European Patent Office

Office européen des brevets

(11) Veröffentlichungsnummer : **0 048 029**
**B1**

(12)

# EUROPÄISCHE PATENTSCHRIFT

(45) Veröffentlichungstag der Patentschrift :
02.05.84

(51) Int. Cl.³ : **A 01 K 87/04**

(21) Anmeldenummer : **81107332.9**

(22) Anmeldetag : **16.09.81**

(54) **Rutenangel mit Angelschnur-Führungsring und Verfahren zu Ihrer Herstellung.**

(30) Priorität : 16.09.80 DEU 8024724
17.02.81 DE 3105770

(43) Veröffentlichungstag der Anmeldung :
24.03.82 Patentblatt 82/12

(45) Bekanntmachung des Hinweises auf die Patenterteilung : 02.05.84 Patentblatt 84/18

(84) Benannte Vertragsstaaten :
AT BE CH DE FR GB IT LI

(56) Entgegenhaltungen :
CH-A-   388 010
FR-A- 1 595 834
GB-A-      6 514
GB-A-   974 687
US-A- 1 923 263
US-A- 2 296 174
US-A- 2 317 129
US-A- 4 186 508

(73) Patentinhaber : **Dequet, Jean Werner**
**Hangstrasse 7**
**D-8911 Windach (DE)**

(72) Erfinder : **Dequet, Jean Werner**
**Hangstrasse 7**
**D-8911 Windach (DE)**

(74) Vertreter : **Von Bezold, Dieter, Dr. Patentanwälte**
**Dr.Dieter v. Bezold et al**
**Dipl.-Ing. Peter Schütz Dipl.-Ing. Wolfgang Heusler**
**Postfach 860260 Maria-Theresia-Strasse 22**
**D-8000 München (DE)**

Rutenangel mit Angelschnur-Führungsring und Verfahren zu ihrer Herstellung

Die vorliegende Erfindung betrifft eine Rutenangel mit einer Rute, an der mindestens ein Führungsring für eine Angelschnur befestigt ist, welcher einen ringförmigen Körper aus verformungs- und verschleißfestem Material enthält, der an der Rute durch eine ihn sowie die Rute in Umfangsrichtung umgebende Wicklung befestigt ist. Ferner betrifft die Erfindung ein Verfahren zum Herstellen einer solchen Rutenangel.

Es sind Schnurführungsringe bekannt, die zwei axial verlaufende Stege aufweisen, mit denen der Schnurführungsring durch eine den Steg und die Rute umfassende Fadenwicklung an der Rute befestigt wird. Diese Art der Befestigung hat den Nachteil, daß ein erhebliches Stück der Rute durch den an ihr angebrachten Führungsring versteift wird und sich dadurch nicht so leicht biegt, wie ihre übrigen Teile. Dies beeinträchtigt die z. B. für Fliegengerten wichtigen Biegeeigenschaften (« Aktion ») der Rutenangel und ist außerdem in ästhetischer Hinsicht unerwünscht, da die versteiften Teile eine stetige Biegung der Rute verhindern, insbesondere bei Ruten aus glasfaserverstärktem Kunststoff.

Es sind ferner Führungsringe bekannt, die in einer ringförmigen Halterung sitzen, welche in einen einzigen axialen Befestigungssteg ausläuft. Bei dieser Art der Befestigung ist zwar die Länge des durch das Anbringen des Führungsringes versteiften Stückes der Rute wesentlich kürzer als bei einer Befestigung durch zwei Stege, andererseits hat die Befestigung mit nur einem Steg den Nachteil, daß sich die Halterung leicht biegt, was nicht nur das Aussehen der Angel beeinträchtigt, sondern auch mit der Zeit zu Ermüdungsbrüchen der Halterung führen kann.

Es ist weiterhin bekannt, die Führungsringe durch eine rohrförmige, auf die Rute geschobene und mit dieser durch einen Schmelzkleber verbundene Muffe an der Rute zu haltern. Diese Halterungen sind relativ aufwendig, da die Muffe dem Durchmesser der Angelrute an der Befestigungsstelle entsprechen muß. Sie können sich bei unsachgemäßer Behandlung verformen, sind schwer und beeinträchtigen die Vibrationsleitfähigkeit der Rute. Es sind schließlich auch Führungsringe bekannt, die einen Einsatz aus einem sehr abriebfesten Werkstoff, wie Keramik, Saphir oder Siliciumkarbid enthalten, um den Verschleiß durch die durchlaufende Angelschnur auszuschalten.

Es ist ferner aus US-A-2,317,129 eine Rutenangel mit einer Rute und einem Schnurführungsring bekannt, welcher einen ringförmigen Körper aus verformungs- und verschleißfestem Material, wie Glas, enthält, der an der Rute durch eine ihn sowie die Rute in Umfangsrichtung umgebende Wicklung aus einem Metallband mittels einer Schraube befestigt ist, welche die Metallbandwicklung zwischen der Rute und dem ringförmigen Körper quer durchsetzt und in eine Ringnut des ringförmigen Körpers eingreift. Auch dieser bekannte Schnurführungsring beeinträchtigt die Biegeeigenschaften der Angelrute und ist außerdem schwer und ungefüge.

Es ist schließlich aus US-A-4,186,508 ein Führungsring mit Halterungsfuß für eine Angelrute bekannt, bei dem der Führungsring aus einer kreisförmigen Wicklung aus kunstharzimprägnierten Graphitfasern und der Fuß aus einem streifenförmigen Laminat aus mit kunstharzimprägnierten Graphitfasern besteht. Der Führungsring und der Fuß sind dadurch miteinander verbunden, daß einige zusätzliche Windungen des Ringes in der Mitte des streifenförmigen Fußes um diesen gewickelt sind. Die Graphitfasern und der wärmegehärtete Kunststoff bilden eine einstückige Führungsring-Fuß-Struktur. Zum Anbringen an einer Angelrute wird der Fuß auf beiden Seiten des Führungsringes durch eine zusätzliche Wicklung an der Angelrute befestigt. Auch hier nimmt der durch die Wicklungen mit der Angelrute verbundene streifenförmige Fuß ein erhebliches Stück der Länge der Angelrute ein, wodurch die Homogenität der Rute beeinträchtigt wird.

Ausgehend von dem Stand der Technik gemäß US-A-2,317,129 liegt der Erfindung die Aufgabe zugrunde, eine Rutenangel mit neuartiger Befestigung mindestens eines Führungsringes an der Rute anzugeben, die die Biegsamkeit der Rute nicht beeinträchtigt, einfach im Aufbau und gefällig im Aussehen ist, keine vorspringenden Teile hat, an denen sich die Leine verhängen kann, eine sichere Halterung des Führungsringes an der Rute gewährleistet, wartungsfrei, leicht sowie praktisch unzerbrechlich ist, eine der Rute vergleichbare Lebensdauer einer der Lebensdauer der Rute vergleichbare Lebensdauer hat und eine bis jetzt nicht erreichbare Vibrationsleitfähigkeit der Angel ergibt.

Diese Aufgabe wird erfindungsgemäß dadurch gelöst, daß die Wicklung aus einem hochfesten Fasermaterial, wie Kohle-, Aramid-, Bor-, Glas-, Polyester-Faser- oder Fadenmaterial, das mit einem Kunstharz, insbesondere einem Zweikomponenten-Epoxidharz oder anderen Ein- oder Zweikomponentenharzen, wie Polyester- oder Polyurethan- oder Polymethacrylatharz Kleber auf Cyanoacrylatbasis imprägniert ist.

Die Wicklung soll sich über einen möglichst großen Teil der axialen Breite des ringförmigen Körpers erstrecken, also über mindestens 60 %, vorzugsweise über 80 bis 100 % der Breite.

Der ringförmige Körper kann eine Kerbe und/oder Umfangsnut aufweisen und besteht aus einem Material hoher Verformungsfestigkeit und Abriebfestigkeit, wie Keramik (z. B. Aluminiumoxidkeramik), Saphir, Siliciumkarbid, Wolframkarbid, anderen keramischen Werkstoffen und dergleichen. Besondere Vorteile ergeben sich bei Verwendung bestimmter zusammengesetzter Ringe.

Weitere vorteilhafte Ausgestaltungen der Erfindung sind in der Beschreibung erwähnt und in Unteransprüchen unter Schutz gestellt.

Durch die erfindungsgemäße Art der Befestigung der Schnurführungsringe an der Rute werden die Biegeeigenschaften der Rute nicht beeinflußt, da die Befestigung nur ein sehr kurzes Stück der Länge der Rute einnimmt und da die axiale Bruchdehnung der verklebten Wicklung größer als die Dehnung des entsprechenden axialen Teiles der Rute ist. Durch die Kombination eines Fasermaterials hoher Zugfestigkeit und geringer Dehnbarkeit mit einem Ringmaterial hoher Verformungsfestigkeit und hoher Verschleißfestigkeit ist eine dauerhafte und sichere Befestigung der Führungsringe an der Rute gewährleistet. Die Verbindung ist korrosionsfest, wartungsfrei und leicht. Sie gewährleistet eine sehr weitgehende Homogenität der Rute, was hinsichtlich der für das Fischen gewünschten hohen Vibrationsfähigkeit der Rutenangel erwünscht ist. Sie ist sehr robust.

Ein weiterer wesentlicher Vorteil besteht darin, daß sich die Befestigung für eine Vielzahl unterschiedlicher Typen von Angelruten und Rutendurchmesser eignet. Gegenüber einer Angel mit sogenannten Schlangenringen hat die vorliegende Rutenangel den Vorteil, daß die Angelschnur im Abstand von der Rute gehalten werden kann und nicht dazu neigt, an dieser zu haften, insbesondere wenn man Ringe verwendet, die eine exzentrische, nach außen verschobene Öffnung aufweisen oder im Abstand von der Rute angeordnet sind.

Im folgenden werden bevorzugte Ausführungsbeispiele der Erfindung unter Bezugnahme auf die Zeichnung näher erläutert.

Es zeigen :

Figur 1 einen Teil einer Rutenangel gemäß einer Ausführungsform der Erfindung mit einer Rute, an der ein Führungsring für eine nicht dargestellte Angelschnur befestigt ist ;

Figur 2 eine Ansicht in einer Ebene II-II der Fig. 1 ;

Figur 3 eine axiale Ansicht eines ringförmigen Körpers ;

Figur 4 eine Axialschnittansicht des ringförmigen Körpers gemäß Fig. 3 ;

Figur 5 eine Fig. 2 entsprechende Darstellung einer weiteren Ausführungsform der Erfindung.

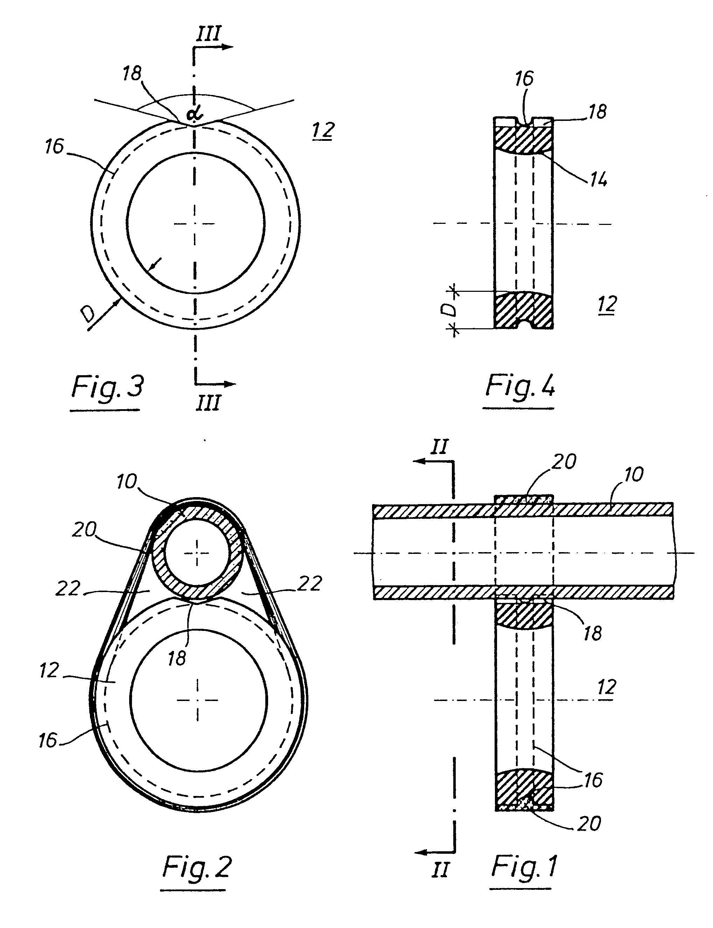

Fig. 1 zeigt einen Teil einer Rutenangel, welche eine Rute 10 sowie einen Führungsring mit einem ringförmigen Körper 12 für eine nicht dargestellte Angelschnur enthält, und die bis auf die noch zu beschreibende Art der Anbringung des ringförmigen Körpers 12 an der Rute 10 konventionell ausgebildet sein kann.

Der in Fig. 3 und 4 für sich dargestellte ringförmige Körper 12 besteht aus Hartkeramik, wie Aluminiumoxidkeramik, oder einem anderen starren, verformungsfesten und abriebfesten Werkstoff, wie z. B. Saphir, Siliciumkarbid, Wolframkarbid usw. Als Führungsring kann z. B. ein Einsatz einer bekannten Schnurführungsringanordnung verwendet werden.

Der ringförmige Körper 12 hat eine etwas konvexe Innenseite 14 und eine Außenseite, die eine muldenförmige Umfangsnut 16 bildet. Die Umfangsnut könnte auch einen anderen, z. B. einen rechteckigen Querschnitt haben oder eine Wellung bilden.

Bei der in Fig. 1 bis 4 dargestellten Ausführungsform der Erfindung weist der ringförmige Körper 12 ferner am äußeren Umfang eine axiale Kerbe 18 auf, die, wie dargestellt, keilförmig sein kann. Die dann ebenen Seitenwände der Kerbe schließen vorteilhafterweise einen Winkel $\alpha$ von z. B. 145° miteinander ein (Fig. 4). Die Tiefe der Kerbe beträgt vorteilhafterweise 1/5 bis 1/4 der radialen Dicke D (Fig. 3) des ringförmigen Körpers. Die Kerbe 18 kann insbesondere bis zum Boden der Umfangsnut 16 reichen.

Im montierten Zustand sitzt der ringförmige Körper 12 mit der axialen Kerbe 18 auf der Rute 10, wie es in Fig. 1 dargestellt ist, und ist mit dieser durch eine Wicklung 20 verbunden, welche die Rute 10 und den ringförmigen Körper 12 in Umfangsrichtung umgibt. Die Wicklung 20 ist vorteilhafterweise mit einem alterungsbeständigen Kunstharz, wie einem Ein- oder Zweikomponentenharz, z. B. einem Epoxidharz, oder auch einem Polyester-, Polyurethan- oder Polymethacrylharz, oder einem Kleber auf Cyanoacrylatbasis imprägniert oder verklebt. Es kann auch ein ringförmigen Körper ohne axiale Kerbe 18 verwendet werden.

Die Wicklung 20 besteht vorteilhafterweise aus Kohle — (Graphit-), Aramid-, Glas-, Bor- oder Polyester-Faser — bzw. Fadenmaterial, wobei diese Materialien in der angegebenen Reihenfolge bevorzugt werden. Die Bruchdehnung der Wicklung soll höchstens 2,5 % vorzugsweise etwa 0,8 % betragen. Zwischen der Wicklung 20 und der Rute 10 sowie dem ringförmigen Körper 12 entstehen Zwickel 22, die mit einer Kunststoffmasse ausgefüllt werden können (nicht dargestellt). Diese Kunststoffmasse hat zweckmäßigerweise etwa die gleichen Eigenschaften, wie das die Wicklung verbindende Kunststoffmaterial, und enthält vorzugsweise ein kurzfaseriges Verstärkungsmaterial, z. B. aus kurzen Kohle- oder Glasfaserstücken.

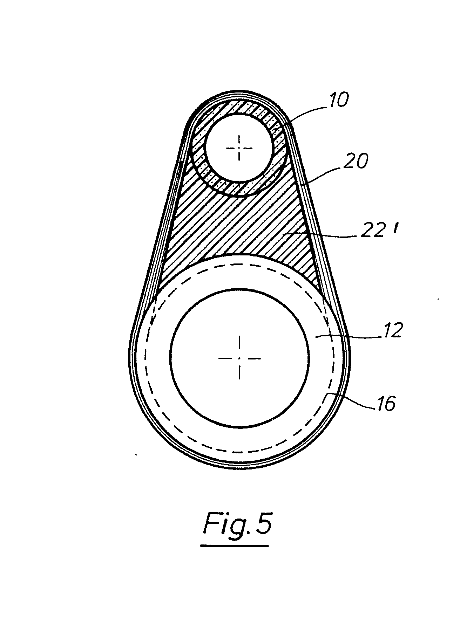

Die oben beschriebene Ausführungsform eignet sich besonders für sogenannte Fliegen-Gerten. Fig. 5 zeigt eine weitere Ausführungsform der Erfindung, die besonders für spezielle Rutenangeln oder Spinnangeln vorteilhaft ist.

Bei der Ausführungsform gemäß Fig. 5 ist der ringförmige Körper 12 im Abstand von der Rute 10 angeordnet. Wie bei der Ausführungsform gemäß Fig. 1 und 2 sind der ringförmige Körper 12 und die Rute 10 durch eine kunststoffgebundene Wicklung 20 aus einem hochfesten Fasermaterial verbunden. Der Zwischenraum zwischen der Rute 10, dem ringförmigen Körper 12 und der Wicklung 20 ist mit einem Kunststoffmaterial 22' ausgefüllt, welches durch einen kurzfaserigen Füllstoff verstärkt ist, z. B. durch kurze Kohle- oder Glasfaserstückchen. Als Kunststoff für das Verbinden der Fäden der Wicklung 20 und als Kunststoff 22' zum Ausfüllen des erwähnten Zwischenraumes kann irgendeiner der oben erwähnten Kunststoffe verwendet werden, bevorzugt wird derzeit ein Zweikomponenten-Epoxidharz.

Zur Herstellung der Wicklung können auf die Rute zwei durchbohrte und gegebenenfalls geschlitzte, als Wicklungsschablone dienende Körper aus Silicongummi oder einem anderen gummielastischen Material wie z. B. Polyurethan oder Polysulfid, aufgeschoben werden, die zwei einander im Abstand der Breite des ringförmigen Körpers gegenüberliegende ebene und senkrecht zur Achse der Angelrute verlaufende Stirnflächen haben. Der zu befestigende ringförmige Körper wird so zwischen die Stirnflächen eingesetzt, daß er die gewünschte Position bezüglich der Rute einnimmt. Zur Halterung des ringförmigen Körpers kann die eine Stirnfläche mit einem warzenartigen Vorsprung versehen sein. Nun wird mit dem Kunstharz imprägnierte Fadenmaterial zwischen die Stirnflächen der Gummikörper und um den ringförmigen Körper und die Rute gewickelt. Nach dem Gelieren des Kunststoffes kann der eine Gummikörper abgehoben werden und die Zwickel 22 bzw. der Zwischenraum 22' (Fig. 5). können dann mit dem kurzfaserverstärkten Kunststoff ausgefüllt werden. Dann kann der abgehobene Gummikörper wieder angedrückt werden. Grate an der imprägnierten Wicklung können durch Abschleifen geglättet werden.

Die Rute wird vom dickeren Ende her beginnend mit den ringförmigen Körpern versehen. Die verwendeten Schablonenkörper werden entsprechend gekennzeichnet und auf Lager genommen, sie können für Ruten mit im wesentlichen gleichen Abmessungen wieder verwendet werden.

Die oben beschriebene bevorzugte Ausführungsform der Erfindung läßt sich ferner dadurch abwandeln, daß man den ringförmigen Körper 12 aus dem harten, verschleißfesten Werkstoff wegläßt und die kunststoffimprägnierte Faserwicklung als Schnurführungsring verwendet, wie es aus der obenerwähnten US-A-4 186 508 an sich bekannt ist. Abweichend von dieser bekannten Konstruktion wird dieser gewickelte ringförmige Körper jedoch nicht über einen streifenförmigen Fuß, sondern durch weitere Wikklungen aus kunstharzimprägniertem hochfesten Fasermaterial direkt mit der Rute verbunden. Auch eine solche Konstruktion nimmt nur ein Minimum der Länge der Rute ein und beeinträchtigt daher die Homogenität der Rute praktisch nicht. Auch diese Konstruktion läßt sich mit einer Schablone der oben beschriebenen Art herstellen, wobei ein Zapfen, wie er bei dem oben beschriebenen Herstellungsverfahren zur Halterung des Keramikringes diente, zuerst ohne daß die Angelrute in die Schablonenkörper eingesetzt ist, mit dem kunstharzimprägnierten Fasermaterial umwickelt wird, um den ringförmigen Körper zu bilden, anschließend wird die Rute eingesetzt und es werden dann weitere Wicklungen aufgebracht, die den ringförmigen Körper und die Rute umfassen. Dann wird der Kunststoff gehärtet, die Schablonenkörper werden entfernt und etwaige scharfe Kanten des ringförmigen Körpers werden dann durch Schleifen oder dergleichen abgerundet.

## Ansprüche

1. Rutenangel mit einer Rute, an der mindestens ein Führungsring für eine Angelschnur befestigt ist, welcher einen ringförmigen Körper (12) aus verformungs- und verschleißfestem Material enthält, der an der Rute (10) durch eine ihn sowie die Rute (10) in Umfangsrichtung umgebende Wicklung (20) befestigt ist, dadurch gekennzeichnet, daß die Wicklung (20) aus Kohle-, Aramid-, Bor-, Glas- oder Polyesterfaser besteht und mit Kunstharz getränkt und verklebt ist.

2. Rutenangel nach Anspruch 1, dadurch gekennzeichnet, daß die Wicklung 60 bis 100 % der Breite des ringförmigen Körpers (12) einnimmt.

3. Rutenangel nach Anspruch 1 oder 2, dadurch gekennzeichnet, daß der ringförmige Körper (12) des Führungsringes aus gewickeltem, kunstharzimprägnierten Fasermaterial besteht.

4. Rutenangel nach Anspruch 1 oder 2, dadurch gekennzeichnet, daß der ringförmige Körper (12) eine Kerbe (18) aufweist, mit der er auf der Rute (10) sitzt.

5. Rutenangel nach einem der Ansprüche 1, 2 oder 4, dadurch gekennzeichnet, daß der ringförmige Körper (12) des Führungsringes aus Keramik, Saphir oder einem hochfesten Carbid besteht.

6. Rutenangel nach einem der Ansprüche 1 bis 3 oder 5, dadurch gekennzeichnet, daß der ringförmige Körper (12) im Abstand von der Rute (10) angeordnet ist und daß der Zwischenraum zwischen der Wickiung (20), dem ringförmigen Körper (12) und der Rute (10) mit einem Kunststoff (22') ausgefüllt ist (Fig. 5).

7. Rutenangel nach einem der vorhergehenden Ansprüche, dadurch gekennzeichnet, daß der ringförmige Körper (12) eine Umfangsnut (16) aufweist, in die die Wicklung (20) gewickelt ist.

8. Rutenangel nach einem der Ansprüche 1 bis 5, dadurch gekennzeichnet, daß der ringförmige Körper (12) auf der Rute (10) sitzt und daß der Zwischenraum (22) zwischen der Wicklung (20), der Rute (10) und dem Führungsring (12) mit einem Kunststoff gefüllt ist.

9. Rutennagel nach Anspruch 8, dadurch gekennzeichnet, daß der den Zwischenraum (22) ausfüllende Kunststoff ein kurzfaseriges Verstärkungsmaterial, insbesondere Glas- oder Kohlefaserstückchen, enthält.

10. Rutenangel nach einem der vorhergehenden Ansprüche, dadurch gekennzeichnet, daß der ringförmige Körper auf der Seite der Angelrute in Radialrichtung dicker ist als auf der entgegengesetzten Seite.

11. Verfahren zum Herstellen einer Rutenangel nach Anspruch 1, dadurch gekennzeichnet, daß auf der Rute eine Wickelschablonenvorrichtung angeordnet wird, die zwei einander im Abstand gegenüberliegende, von der Rute durchsetzte und senkrecht zu ihr verlaufende Stirnflächen aufweist, zwischen die ein zu befestigender ringförmiger Körper so eingesetzt ist, daß er eine vorgegebene Position bezüglich der Rute einnimmt, und daß der ringförmige Körper und die Rute mit hochfestem Fadenmaterial, das mit einem härtbaren Kunststoff getränkt ist, umwickelt werden.

12. Verfahren nach Anspruch 11, dadurch gekennzeichnet, daß eine Wickelschablonenvorrichtung aus zwei Körpern aus gummielastischem Material verwendet wird, welche durch Gießen eines einstückigen Körpers um die vorgegebene Befestigungsstelle des ringförmigen Körpers an der Rute und anschließendes Zerschneiden desselben senkrecht zur Achse der durch die Rute geformten Höhlung gebildet worden sind.

### Claims

1. A fishing rod comprising a rod and at least one guide ring for a fishing line attached to said rod, said guide ring comprising a ring-shaped body (12) of deformation and wear resistant material attached to said rod (10) by a winding (20) surrounding said body and said rod (10) in circumferential direction, characterized in that said winding (20) consists of carbon fibre, aramide fibre, boron fibre, glass fibre or polyester fibre, and is impregnated and cemented with synthetic resin.

2. A fishing rod according to claim 1, characterized in that said winding takes up 60 to 100 % of the width of said ring-shaped body (12).

3. Fishing rod according to claim 1 or 2, characterized in that said ring-shaped body (12) of said guide ring consists of wound and synthetic resin impregnated fibre material.

4. Fishing rod according to claim 1 or 2, characterized in that said ring-shaped body (12) has a notch (18) with which it is seated on said rod (10).

5. Fishing rod in accordance with any of claims 1, 2 or 4, characterized in that said ring-shaped body (12) of said guide ring consists of ceramic, sapphire or a high-strength carbide.

6. Fishing rod according to any of claims 1 to 3 or 5, characterized in that said ring-shaped body (12) is spaced from said rod (10), and that the space between said winding (20), said ring-shaped body (12) and said rod (10) is filled with synthetic resin (22') (Fig. 5).

7. Fishing rod in accordance with any of the preceding claims characterized in that said ring-shaped body (12) has a circumferential groove (16) into which said winding (20) is wound.

8. Fishing rod according to any of claims 1 to 5, characterized in that said ring-shaped body (12) is seated on said rod (10), and that the space (22) between said winding (20), said rod (10) and said guide ring (12) is filled with synthetic resin.

9. Fishing rod according to claim 8, characterized in that said synthetic resin filling said space (22) comprises a short fibre reinforcement material, as glass or carbon fibre pieces.

10. Fishing rod according to any of the preceding claims characterized in that said ring-shaped body is thicker in radial direction on the side adjacent to said rod than at the opposite side.

11. A method for producing a fishing rod according to claim 1, characterized in that a winding template device is positioned on said rod, said template device having two spaced faces which are turned towards each other, are traversed by said rod, and are normal to said rod, and between which a ring-shaped body to be attached is placed at a desired position in relation to the rod, and that a high-strength thread material impregnated with synthetic resin is wound around the rod and the ring-shaped body.

12. The method as claimed in claim 11, characterized in that a winding template device consisting of two bodies of rubber-elastic material is used which have been formed by casting an integral body round the rod at the position where the guide ring is to be attached and by subsequent cutting thereof normal to the axis of the cavity formed by said rod.

### Revendications

1. Canne à pêche, comportant une canne, sur laquelle est fixé au moins un anneau de guidage, qui est destiné à une ligne de pêche et contient un corps annulaire (12) en une matière résistant à la déformation et à l'usure, ce corps étant fixé à la canne (10) par un enroulement (20) l'entourant ainsi que la canne (10) périphériquement, caractérisée en ce que l'enroulement (20) est en fibres de carbone, d'aramide, de bore, de verre ou de polyester et qu'il est imprégné et collé avec de la résine synthétique.

2. Canne à pêche suivant la revendication 1, caractérisée en ce que l'enroulement prend 60 à 100 % de la largeur du corps annulaire (12).

3. Canne à pêche suivant une quelconque des revendications 1 et 2, caractérisée en ce que le corps annulaire (12) de l'anneau de guidage est en une matière fibreuse enroulée, imprégnée de résine synthétique.

4. Canne à pêche suivant une quelconque des revendications 1 et 2, caractérisée en ce que le corps annulaire (12) comporte une entaille (18), avec laquelle il est logé sur la canne (10).

5. Canne à pêche suivant une quelconque des revendications 1, 2 et 4, caractérisée en ce que le corps annulaire (12) de l'anneau de guidage est en céramique, en saphir ou en un carbure à haute résistance.

6. Canne à pêche suivant une quelconque des revendications 1 à 3 et 5, caractérisée en ce que le corps annulaire (12) est à une certaine distance de la canne (10) et que l'espace intermédiaire entre l'enroulement (20), le corps annulaire (12) et la canne (10) est rempli d'une matière plastique (22') (figure 5).

7. Canne à pêche suivant une quelconque des revendications précédentes, caractérisée en ce que le corps annulaire (12) comporte une rainure périphérique (16), dans laquelle l'enroulement (20) est enroulé.

8. Canne à pêche suivant une quelconque des revendications 1 à 5, caractérisée en ce que le corps annulaire (12) est logé sur la canne (10) et que l'espace intermédiaire (22) entre l'enroulement (20), la canne (10) et l'anneau de guidage (12) est rempli d'une matière plastique.

9. Canne à pêche suivant la revendication 8, caractérisée en ce que la matière plastique remplissant l'espace intermédiaire (22) contient une matière de renforcement à fibres courtes, en particulier des particules de fibres de verre ou de carbone.

10. Canne à pêche suivant une quelconque des revendications précédentes, caractérisée en ce que le corps annulaire est radialement plus épais sur le côté de la canne à pêche que sur le côté opposé.

11. Procédé de fabrication d'une canne à pêche suivant la revendication 1, caractérisé en ce qu'il est placé, sur la canne, un dispositif à gabarit d'enroulement comportant deux surfaces frontales, qui se font face à une certaine distance l'une de l'autre, sont traversées par la canne et lui sont perpendiculaires, un corps annulaire à fixer étant inséré entre elles de manière qu'il prenne, par rapport à la canne, une position déterminée à l'avance et que le corps annulaire et la canne soient enroulés dans un matériau qui contient des fils et qui est imprégné d'une matière plastique durcissable.

12. Procédé suivant la revendication 11, caractérisé en ce qu'on utilise un dispositif à gabarit d'enroulement composé de deux corps en un matériau ayant l'élasticité du caoutchouc, ces deux corps ayant été formés par coulée d'un corps — constitué d'une seule pièce — autour de l'endroit de fixation, déterminé à l'avance, du corps annulaire sur la canne, puis par découpage de celui-ci perpendiculairement à l'axe de la cavité formée par la canne.

Fig.3

Fig.4

Fig.2

Fig.1

*Fig.5*